# FASCICULE DE BREVET EUROPEEN

(11) **EP 2 511 616 B1**
(45) Date de publication et mention de la délivrance du brevet: **06.07.2016**
(21) Numéro de dépôt: 11305446.4
(22) Date de dépôt: 14.04.2011
(51) Int. Cl.: F24D 19/10, G01K 17/06, G01K 17/08

(54) **Repartiteur de cout de chauffage**
Heizkostenverteiler
Heating cost distributor

(43) Date de publication de la demande: 17.10.2012
(73) Titulaire: Itron France, 92100 Boulogne-Billancourt (FR)
(72) Inventeur: Guillot-Jérome, Denis, 01310 Buellas (FR); Arnaud-Godet, Brice, 71000 Macon (FR); Giraud, Olivier, 69850 Saint-Martin en Haut (FR); Abelard, Tristan, 71000 Macon (FR)
(74) Mandataire: Howson, Richard G.B.

(56) Documents cités:
- EP-A1- 1 605 238
- EP-A1- 1 925 924
- EP-A2- 1 077 366
- DE-B3-102009 005 490
- DE-B3-102010 003 967
- DE-U1-202004 007 802
- DE-U1-202008 009 279

## Description

L'invention concerne un répartiteur de coût de chauffage.

Elle concerne plus précisément un répartiteur de coût de chauffage destiné à être fixé sur un élément chauffant, par exemple un radiateur, et comportant dans un boîtier une carte électronique connectée à un premier capteur de température destiné à la mesure de la température externe de la pièce et à un second capteur de température destiné à la mesure de la température de l'élément chauffant.

Le document de brevet DE 20 2004 007 802 U1 décrit un tel répartiteur de coût de chauffage.

Selon ce document, le second capteur de température destiné à la mesure de la température de l'élément chauffant est fixé à l'extrémité d'un bras flexible réalisé d'une pièce avec la carte électronique.

Ce document ne précise aucune constitution de disposition du premier capteur de température destiné à la mesure de la température externe de la pièce et la carte électronique, selon ce document, est disposée parallèlement à la partie arrière du boîtier destiné à être appliqué à l'élément chauffant. Cette disposition de la carte électronique est dépendante des agencements de disposition des deux capteurs.

Le but de l'invention est de réaliser le couplage du premier capteur de température destiné à la mesure de la température externe de la pièce, de façon simple techniquement et de façon économique et de façon à permettre une très grande liberté de positionnement de la carte électronique au sein du boîtier qui peut être parallèle à la partie arrière du boîtier destiné à être appliqué à l'élément chauffant ou non, tout en permettant de positionner ce premier capteur et de réaliser les couplages thermiques de façon optimale.

Selon la présente invention, on décrit un répartiteur de coût de chauffage, conformément à la revendication 1.

Pour ce faire, l'invention propose un répartiteur de coût de chauffage destiné à être fixé sur un élément chauffant et comportant dans un boîtier une carte électronique connectée à un premier capteur de température destiné à la mesure de la température externe et à un second capteur de température destiné à la mesure de la température dudit élément chauffant, caractérisé en ce que ladite carte électronique comporte au moins un bras flexible réalisé d'une seule pièce avec cette carte et portant ledit premier capteur.

Selon un mode de réalisation préféré de l'invention, ledit premier capteur de température destiné à la mesure de la température externe est disposé à l'extrémité dudit bras flexible.

Ladite carte électronique peut être disposée de façon inclinée par rapport à un plan perpendiculaire à un axe longitudinal du répartiteur et ledit second capteur destiné à la mesure de la température dudit élément chauffant être porté par une extrémité de cette carte électronique pour venir à proximité dudit élément chauffant.

Ladite carte électronique peut comporter un second bras flexible réalisé d'une seule pièce avec cette carte et portant ledit second capteur de température destiné à la mesure de la température dudit élément chauffant.

Dans ce cas, de préférence, ledit second capteur de température destiné à la mesure de la température dudit élément chauffant est disposé à l'extrémité dudit second bras flexible.

Le répartiteur peut comporter un agencement de type piston traversant ladite carte électronique et poussant ledit second capteur contre ledit adaptateur.

L'invention est décrite ci-après plus en détail à l'aide de figures représentant des modes de réalisation préférés de l'invention.

Les figures 1A à 1D sont des vues en coupe longitudinale d'un premier mode de réalisation d'un répartiteur conforme à l'invention, ainsi que de la carte électronique correspondante.

Les figures 2A à 2D sont des vues en coupe longitudinale d'un deuxième mode de réalisation d'un répartiteur conforme à l'invention, ainsi que de la carte électronique correspondante.

Les figures 3A à 3D sont des vues en coupe longitudinale d'un troisième mode de réalisation d'un répartiteur conforme à l'invention, ainsi que de la carte électronique correspondante.

Comme représenté sur les figures, un répartiteur de coût de chauffage destiné à être fixé sur un élément chauffant comporte un boîtier 1 disposé sur un adaptateur arrière 2 destiné à être fixé sur l'élément chauffant, par exemple un radiateur.

Ce boîtier 1 contient une carte électronique 3 reliée une batterie 6 et connectée à un écran 7, à un premier capteur de température 4 destiné à la mesure de la température externe de la pièce et disposé à proximité du ou contre le boîtier 1 et à un second capteur de température 5 destiné à la mesure de la température de l'élément chauffant et disposé à proximité de ou contre l'adaptateur 2.

Selon l'invention, la carte électronique 3 comporte au moins un bras flexible 3A réalisé d'une seule pièce avec cette carte et portant le premier capteur de température 4 destiné à la mesure de la température externe. Ce premier capteur de température 4 destiné à la mesure de la température externe est de préférence disposé à l'extrémité du bras flexible 3A.

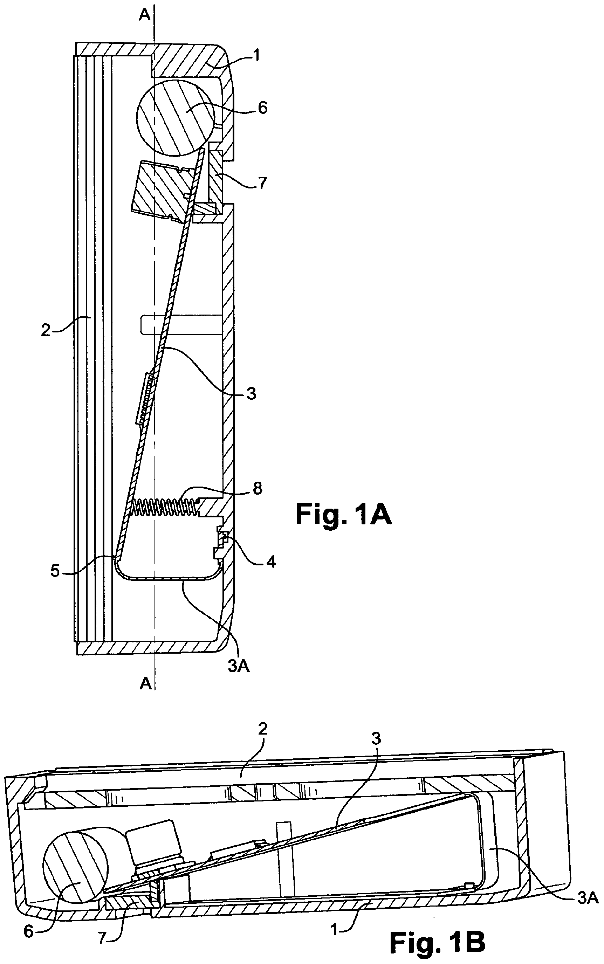

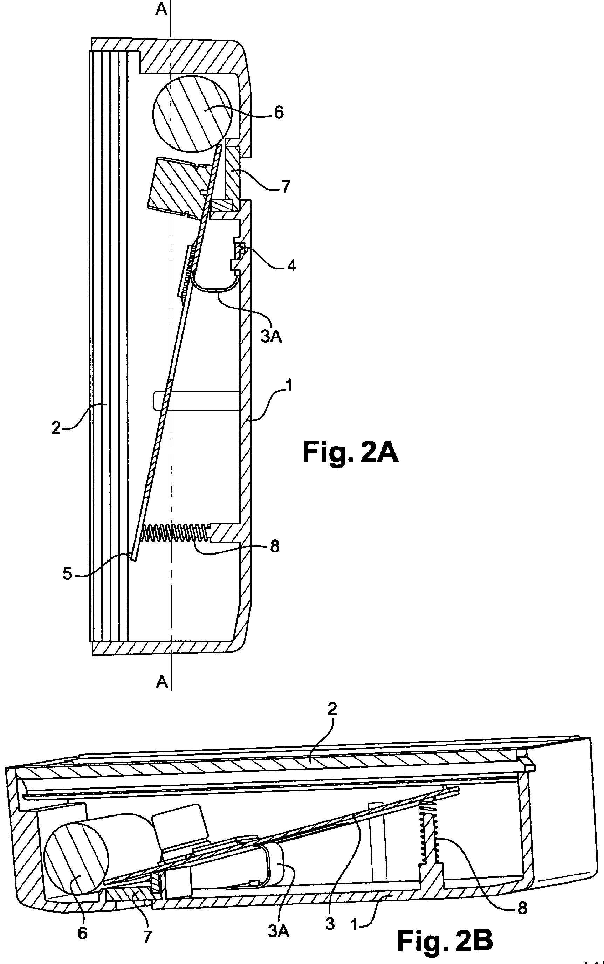

Selon un premier mode de réalisation représenté sur les figures 1A, 1B, 2A et 2B, la carte électronique 3 est disposée de façon inclinée par rapport au plan longitudinal A-A du répartiteur et le second capteur de température 5 destiné à la mesure de la température de l'élément chauffant est porté par une extrémité de cette carte électronique 3 pour venir contre l'adaptateur 2 ou à proximité de l'adaptateur 2, cette carte électronique étant poussé par un élément de ressort 8 en direction de cet adaptateur 2.

Selon une première variante représentée sur la figure 1A et 1B, le bras flexible 3A est conformé à proximité de cette même extrémité de la carte électronique 3 et est recourbé sur la largeur du répartiteur pour venir placer le premier capteur de température 4 contre le boîtier 1 ou à proximité du boîtier 1.

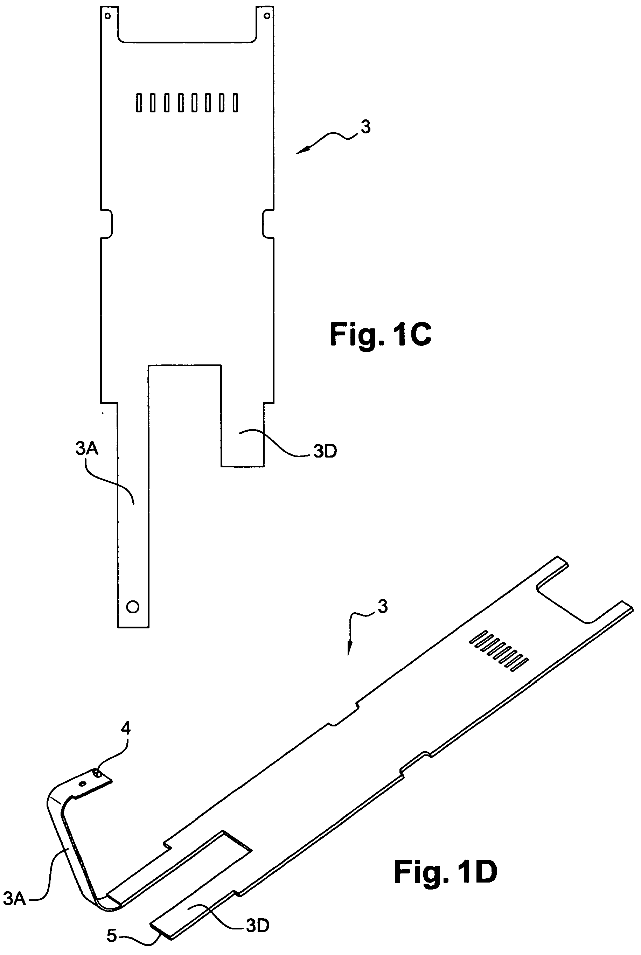

La carte électronique 3 est alors conformée comme illustrée sur les figures 1C et 1D.

Vue selon les figures, elle comporte à son extrémité inférieure le bras flexible 3A et avantageusement un autre bras non flexible 3D. L'extrémité du bras flexible 3A est équipée du premier capteur de température 4 destiné à la mesure de la température externe et l'extrémité du bras non flexible 3D est équipée du second capteur de température 5 destiné à la mesure de la température de l'élément chauffant. Le bras flexible 3A est ensuite recourbé comme illustré sur la figure 1D pour disposer la carte électronique 3 et les capteurs dans le boîtier 1 comme illustré sur les figures 1A et 1B.

Selon une seconde variante représentée sur la figure 2A et 2B, le bras flexible 3A est conformé sur la surface de la carte électronique 3 à une distance de l'extrémité de la carte électronique 3 portant le second capteur 5 destiné à la mesure de la température de l'élément chauffant et il est recourbé sur une largeur inférieure pour venir placer le premier capteur de température 4 contre le boîtier 1 ou à proximité du boîtier 1.

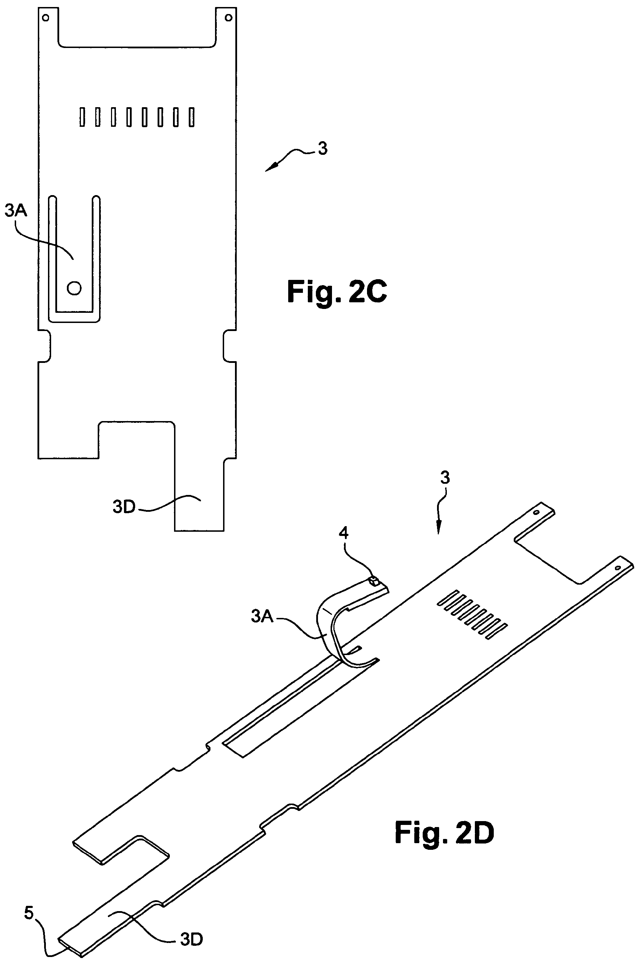

La carte électronique 3 est alors conformée comme illustrée sur les figures 2C et 2D.

Vue selon les figures, elle comporte à son extrémité inférieure un bras non flexible 3D, comme selon la première variante. Le bras flexible 3A est quant à lui formé par une découpe réalisé dans la carte 3. L'extrémité du bras flexible 3A est équipée du premier capteur de température 4 destiné à la mesure de la température externe et l'extrémité du bras non flexible 3D est équipée du second capteur de température 5 destiné à la mesure de la température de l'élément chauffant. Le bras flexible 3A est ensuite recourbé comme illustré sur la figure 2D pour disposer la carte électronique 3 et les capteurs dans le boîtier 1 comme illustré sur les figures 2A et 2B.

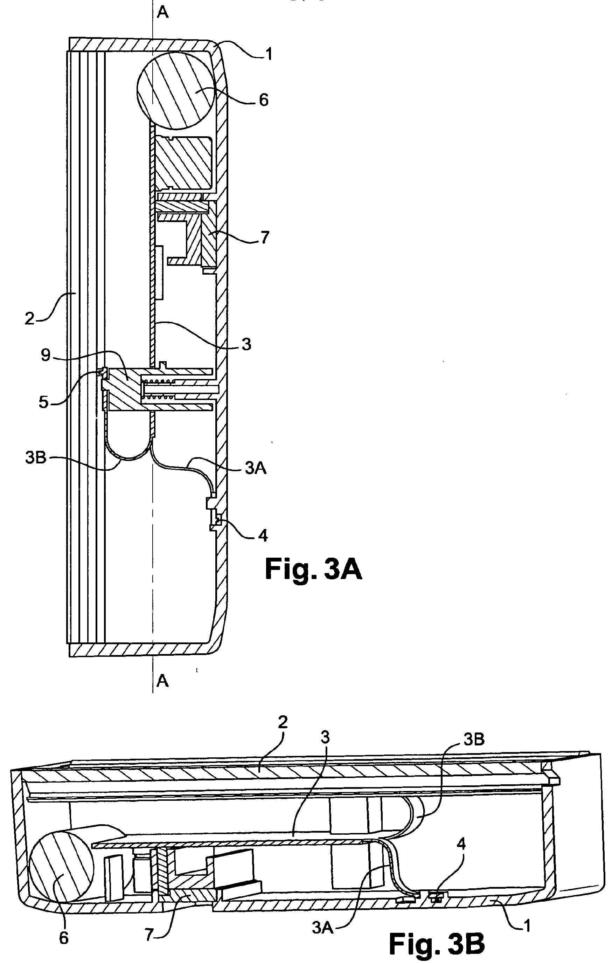

Selon un second mode de réalisation représenté sur la figure 3A et 3B, la carte électronique 3 comporte un second bras flexible 3B réalisé d'une seule pièce avec cette carte et portant le second capteur de température 5 destiné à la mesure de la température de l'élément chauffant. Ce second capteur de température 5 destiné à la mesure de la température de l'élément chauffant est de préférence disposé à l'extrémité de ce second bras flexible 3B.

Dans ce cas, avantageusement, la carte électronique 3 est disposé dans un plan parallèle au plan longitudinal A-A du répartiteur et les deux bras flexibles 3A et 3B sont conformés à proximité d'une extrémité de la carte électronique 3 et sont recourbés de part et d'autre de la carte 3 pour venir placer les capteurs de température 4 et 5 contre le boîtier 1 et l'adaptateur 2 ou à proximité du boîtier 1 et de l'adaptateur 2.

Avantageusement, un agencement de type piston 9 sollicité par un élément de ressort et d'axe fixe conformé dans le boîtier 1 traverse la carte électronique 3 et assure la pression du second capteur 5 contre l'adaptateur 2.

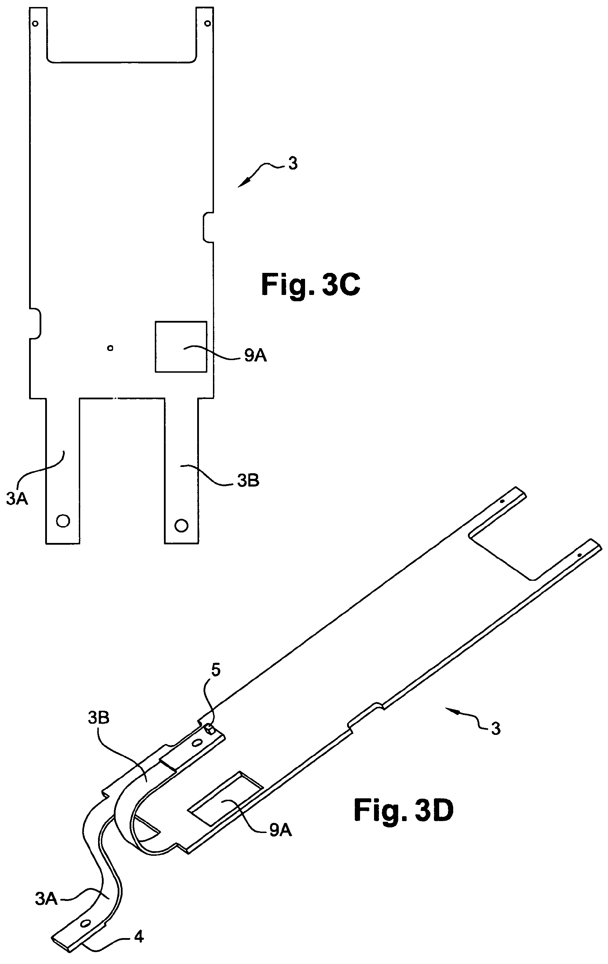

La carte électronique 3 est alors conformée comme illustrée sur les figures 3C et 3D.

Vue selon les figures, elle comporte à son extrémité inférieure le bras flexible 3A et l'autre bras flexible 3B. L'extrémité du bras flexible 3A est équipée du premier capteur de température 4 destiné à la mesure de la température externe et l'extrémité de l'autre bras flexible 3B est équipée du second capteur de température 5 destiné à la mesure de la température de l'élément chauffant.

La carte 3 présente également un orifice 9A afin de permettre le passage de l'agencement de type piston 9.

Les bras flexibles 3A, 3B sont ensuite recourbés comme illustré sur la figure 3D pour disposer la carte électronique 3 et les capteurs dans le boîtier 1 comme illustré sur les figures 3A et 3B.

## Revendications

1. Répartiteur de coût de chauffage destiné à être fixé sur un élément chauffant et comportant dans un boîtier (1) une carte électronique (3) connectée à un premier capteur de température (4) destiné à la mesure de la température externe et disposé à proximité dudit boîtier et à un second capteur de température (5) destiné à la mesure de la température dudit élément chauffant et disposé à proximité dudit élément chauffant, ladite carte électronique (3) comportant au moins un bras flexible (3A) réalisé d'une seule pièce avec cette carte, formé par une découpe de ladite carte (3), portant ledit premier capteur de température (4) destiné à la mesure de la température externe et **caractérisé en ce que** le bras est recourbé pour venir placer ce premier capteur de température à proximité dudit boîtier.

2. Répartiteur selon la revendication précédente, **caractérisé en ce que** ledit premier capteur de température (4) destiné à la mesure de la température externe est disposé à l'extrémité dudit bras flexible (3A).

3. Répartiteur selon l'une des revendications précédentes, **caractérisé en ce que** ladite carte électronique (3) est disposée de façon inclinée par rapport à un plan longitudinal (A-A) du répartiteur et **en ce que** ledit second capteur (5) destiné à la mesure de la température dudit élément chauffant est porté par une extrémité de cette carte électronique (3) pour venir à proximité dudit élément chauffant.

4. Répartiteur selon la revendication 1 ou 2, **caractérisé en ce que** ladite carte électronique (3) comporte un second bras flexible (3B) réalisé d'une seule pièce avec cette carte, formé par une découpe de ladite carte (3), portant ledit second capteur de température (5) destiné à la mesure de la température dudit élément chauffant et recourbé pour venir placer ce second capteur de température à proximité dudit élément chauffant.

5. Répartiteur selon la revendication précédente, **caractérisé en ce que** ledit second capteur de température (5) destiné à la mesure de la température dudit élément chauffant est disposé à l'extrémité dudit second bras flexible (3B).

6. Répartiteur selon la revendication 4 ou 5, **caractérisé en ce qu'**il comporte un agencement de type piston (9) traversant ladite carte électronique (3) et poussant ledit second capteur (5) contre ledit adaptateur (2).

## Patentansprüche

1. Heizkostenverteiler, der dazu bestimmt ist, auf einem Heizelement befestigt zu werden, und in einem Gehäuse (1) eine Elektronikkarte (3) aufweist, die an einen ersten Temperaturfühler (4), der zum Messen der Außentemperatur bestimmt und in der Nähe des Gehäuses angeordnet ist, und an einen zweiten Temperaturfühler (5) angeschlossen ist, der zum Messen der Temperatur des Heizelements bestimmt und in der Nähe des Heizelements angeordnet ist, wobei die Elektronikkarte (3) mindestens einen flexiblen Arm (3A) aufweist, der aus einem Stück mit dieser Karte hergestellt und durch einen Ausschnitt der Karte (3) gebildet ist, der den ersten Temperaturfühler (4), der zum Messen der Außentemperatur bestimmt ist, trägt, **dadurch gekennzeichnet, dass** der Arm gebogen ist, um diesen ersten Temperaturfühler in der Nähe des Gehäuses anzuordnen.

2. Ve
rteiler nach dem vorhergehenden Anspruch, **dadurch gekennzeichnet, dass** der erste Temperaturfühler (4), der zum Messen der Außentemperatur bestimmt ist, am Ende des flexiblen Arms (3A) angeordnet ist.

3. Verteiler nach einem der vorhergehenden Ansprüche, **dadurch gekennzeichnet, dass** die Elektronikkarte (3) geneigt in Bezug zu einer Längsebene (A-A) des Verteilers angeordnet ist, und dass der zweite Fühler (5), der zum Messen des Heizelements bestimmt ist, von einem Ende dieser Elektronikkarte (3) getragen wird, um in die Nähe des Heizelements zu gelangen.

4. Verteiler nach Anspruch 1 oder 2, **dadurch gekennzeichnet, dass** die Elektronikkarte (3) einen zweiten flexiblen Arm (3B) aufweist, der aus einem Stück mit dieser Karte hergestellt und durch einen Ausschnitt der Karte (3) gebildet ist, der den zweiten Temperaturfühler (5), der zum Messen der Temperatur des Heizelements bestimmt ist, trägt, und der gebogen ist, um diesen zweiten Temperaturfühler in der Nähe des Heizelements anzuordnen.

5. Verteiler nach dem vorhergehenden Anspruch, **dadurch gekennzeichnet, dass** der zweite Temperaturfühler (5), der zum Messen der Temperatur des Heizelements bestimmt ist, um Ende des zweiten flexiblen Arms (3B) angeordnet ist.

6. Verteiler nach Anspruch 4 oder 5, **dadurch gekennzeichnet, dass** er eine Anordnung vom Typ Kolben (9) aufweist, der die Elektronikkarte (3) durchquert und den zweiten Fühler (5) gegen den Adapter (2) schiebt.

## Claims

1. Heating cost allocator intended to be fixed on a heating element and having, in a housing (1), an electronic card (3) connected to a first temperature sensor (4) intended for the measurement of the external temperature and disposed close to said housing and to a second temperature sensor (5) intended for the measurement of the temperature of the said heating element, said electronic card (3) comprising at least one flexible branch (3A) produced in one piece with this card, formed by cutting out from said card (3), bearing said first temperature sensor (4) intended for measurement of the external temperature and **characterised in that** the branch is bent in order to place this first temperature sensor close to said housing.

2. Allocator according to the preceding claim, **characterised in that** said first temperature sensor (4) intended for the measurement of the external temperature is disposed at the end of said flexible branch (3A).

3. Allocator according to one of the preceding claims, **characterised in that** said electronic card (3) is disposed in an inclined manner with respect to a longitudinal plane (A-A) of the allocator, and **in that** said second sensor (5) intended for the measurement of the temperature of said heating element is borne by one end of said electronic card (3) in order to come close to said heating element.

4. Allocator according to claim 1 or 2, **characterised in that** said electronic card (3) includes a second flexible branch (3B) produced in one piece with this card, which is formed by cutting out from said card (3), bears said second temperature sensor (5) intended for measurement of the temperature of said heating element and is bent in order to place this second temperature sensor close to said heating element.

5. Allocator according to the preceding claim, **characterised in that** said second temperature sensor (5) intended for the measurement of the temperature of said heating element is disposed at the end of said second flexible branch (3B).

6. Allocator according to claim 4 or 5, **characterised in that** it includes an arrangement of the piston type (9) passing through said electronic card (3) and pushing said second sensor (5) against said adapter (2).
